# EUROPEAN PATENT APPLICATION

(11) **EP 4 067 823 A1**
(43) Date of publication of application: **05.10.2022**
(21) Application number: 20892288.0
(22) Date of filing: 30.11.2020
(51) Int. Cl.: G01C 21/36, G01C 21/34, G06Q 10/02

(54) **METHOD FOR PROVIDING INTEGRATED NAVIGATION SERVICE USING VEHICLE SHARING NETWORK, AND DEVICE AND SYSTEM FOR SAME**

(30) Priority: 28.11.2019 KR 20190156041
(71) Applicant: Humax Co., Ltd., Yongin-si, Gyeonggi-do 17040 (KR); Digiparts, Inc., Yongin-si, Gyeonggi-do 16950 (KR)
(72) Inventor: JUNG, Sung Ill, Yongin-si, Gyeonggi-do 16877 (KR); WOO, Hyuk Joon, Yongin-si, Gyeonggi-do 16877 (KR); LEE, Sang Min, Seoul 07951 (KR)
(74) Representative: M. Zardi & Co S.A.
(86) International application number: PCT/KR2020/017309
(87) International publication number: WO 2021/107732

(57) **Abstract**

The present invention relates to a method for providing an integrated navigation service, and a device and system for same, wherein the method for providing an integrated navigation service in connection with a mobile device and a vehicle sharing server through a communication network according to an embodiment of the present invention may comprise the steps of: receiving, from the mobile device, an integrated navigation service request message including information on a user-set route; acquiring, from the vehicle sharing server, shared vehicle reservation information corresponding to the user-set route; determining, based on the shared vehicle reservation information, whether the user-set route is required to be changed; calculating an optimal route by reflecting the shared vehicle reservation information, if it is determined that the user-set route is required to be changed; and transmitting the calculated optimal route to the mobile device. Accordingly, the present invention is advantageous in that a more accurate and stable navigation service can be provided.

## Description

### [Technical Field]

The present invention relates to a vehicle sharing service, and more particularly, to a method, device, and system for providing an integrated navigation service using a vehicle sharing network.

### [Background Art]

Recently, in the global interest in the sharing economy, a car-sharing (vehicle sharing) services in which an unspecified number of people share a vehicle, are spreading rapidly, and as the number of users using the vehicle sharing services increases, the number of shared vehicles is also increasing rapidly.

The vehicle sharing service is a kind of rental car service in which an unspecified number of people rent and use a specific vehicle for as long as necessary. From the perspective of users, the biggest difference between the vehicle sharing service and the existing rental car service is that users may select and reserve shared vehicles they want by using apps installed on their smartphones, etc., without having to face vehicle owners or vehicle sharing service providers directly.

When a route is set using a navigation application installed on a conventional vehicle head unit and a smartphone, only the current road condition is reflected, so the route is not only frequently reset while traveling, but the arrival time is also frequently changed accordingly.

Also, in the related art, different routes are provided to the same destination according to types of navigation applications installed on the vehicle head unit and the smartphone, and thus, there is a problem in that the reliability of the optimal route is lowered.

### [Disclosure]

### [Technical Problem]

The present invention provides a method, device, and system for providing an integrated navigation service using a vehicle sharing network.

The present invention provides a method, device, and system for providing an integrated navigation service using a vehicle sharing network capable of more accurately and stably providing an optimal route or an optimal transfer route to a destination by predicting future road conditions based on shared vehicle reservation information collected through the vehicle sharing network.

The technical problems to be achieved by the present invention are not limited to the technical problems described above, and other technical problems that are not described may be clearly understood by those with ordinary knowledge in the technical field to which the present invention belongs from the following description.

### [Technical Solution]

The present invention may provide a method for providing an integrated navigation service, and a device and system for the same.

According to an embodiment of the present invention, a method for providing an integrated navigation service in connection with a mobile device and a vehicle sharing server through a communication network may include: receiving, from the mobile device, an integrated navigation service request message including information on a user-set route; acquiring, from the vehicle sharing server, shared vehicle reservation information corresponding to the user-set route; determining, based on the shared vehicle reservation information, whether the user-set route is required to be changed; calculating an optimal route by reflecting the shared vehicle reservation information, if it is determined that the user-set route is required to be changed; and transmitting the calculated optimal route to the mobile device.

The mobile device may be mounted on a shared vehicle and may include a vehicle head unit equipped with a navigation function and a user terminal using the shared vehicle.

The shared vehicle reservation information may be information for reserving a shared vehicle by setting a destination on the user-set route.

The shared vehicle reservation information may exclude reservation information corresponding to a shared vehicle currently driving on the user-set route.

A future road condition on the user-set route may be predicted based on the shared vehicle reservation information, and an optimal route is calculated based on the prediction result.

The method may further include: identifying a shared vehicle currently driving on the user-set route; collecting, from the identified shared vehicle, shared vehicle driving information; analyzing the collected shared vehicle driving information to determine whether driving information sharing is required; determining, from the collected shared vehicle driving information, share target information, if it is determined that the sharing is required; and transmitting the determined share target information to the mobile device.

The shared vehicle driving information may include at least one of vehicle type information, vehicle unique identifier information, destination information, departure information, current position information, current driving road name information, current traffic condition information, current driving speed information, road image information taken through a camera mounted on the shared vehicle, and a user message.

The method may further include: collecting, from a mobile device subscribed to a vehicle sharing service, the shared vehicle driving information; dividing the shared vehicle driving information for each vehicle type; calculating, based on the shared vehicle driving information divided for each vehicle type, an optimal transfer route for a shared vehicle currently driving; and transmitting the calculated optimal transfer route to the mobile device.

The method may further include: checking whether the user-set route is changed to the optimal route or the optimal transfer route on the mobile device; applying a usage fee discount of the shared vehicle to a user of the mobile device, if it is checked that the user-set route is changed; and transmitting details of the usage fee discount to the vehicle sharing server.

According to another embodiment of the present invention, an integrated navigation server in connection with a mobile device and a vehicle sharing server through a communication network may include: a communication module configured to receive, from the mobile device, an integrated navigation service request message including information on a user-set route; a reservation information collection module configured to acquire, from the vehicle sharing server, shared vehicle reservation information corresponding to the user-set route; a route resetting determination module configured to determine, based on the shared vehicle reservation information, whether the user-set route is required to be changed; an optimal route calculation unit configured to calculate an optimal route by reflecting the shared vehicle reservation information, if it is determined that the user-set route is required to be changed; and a control module configured to transmit the calculated optimal route to the mobile device through the communication module.

The mobile device may be mounted on a shared vehicle and may include a vehicle head unit equipped with a navigation function and a user terminal using the shared vehicle.

The shared vehicle reservation information may be information for reserving a shared vehicle by setting a destination on the user-set route.

The shared vehicle reservation information may exclude reservation information corresponding to a shared vehicle currently driving on the user-set route.

The optimal route calculation unit may predict a future road condition on the user-set route based on the shared vehicle reservation information, and calculate an optimal route based on the prediction result.

The integrated navigation server may further include: a driving information collection module configured to identify a shared vehicle currently driving on the user-set route and collect, from the identified shared vehicle, shared vehicle driving information; and a driving information sharing module configured to analyze the collected shared vehicle driving information to determine whether the driving information is required to be shared, and determine, from the collected shared vehicle driving information, share target information, if it is determined that the sharing is required to transmit the determined share target information to the mobile device.

The shared vehicle driving information may include at least one of vehicle type information, vehicle unique identifier information, destination information, departure information, current position information, current driving road name information, current traffic condition information, current driving speed information, road image information taken through a camera mounted on the shared vehicle, and a user message.

The integrated navigation server may further include: a vehicle type identification module configured to divide, for the vehicle type, the shared vehicle driving information collected from a mobile device subscribed to a vehicle sharing service; and an optimal transfer route calculation unit configured to calculate, based on the shared vehicle driving information divided for each vehicle type, an optimal transfer route for a shared vehicle currently driving, in which the control module may transmit the calculated optimal transfer route to the mobile device.

The integrated navigation server may further include: a route change check module configured to check whether the user-set route is changed to the optimal route or the optimal transfer route on the mobile device; a rate discount module configured to apply a usage fee discount of the shared vehicle to a user of the mobile device, if it is checked that the user-set route is changed, in which the control module may transmit details of the usage fee discount to the vehicle sharing server.

According to still another embodiment of the present invention, a system for providing an integrated navigation service may include: a mobile device equipped with a navigation function; a vehicle sharing server configured to provide a vehicle sharing service; and an integrated navigation server configured to provide the integrated navigation service in connection with the mobile device and the vehicle sharing server through a communication network, in which the integrated navigation server may include: a communication module configured to receive, from the mobile device, an integrated navigation service request message including information on a user-set route; a reservation information collection module configured to acquire, from the vehicle sharing server, shared vehicle reservation information corresponding to the user-set route; a route resetting determination module configured to determine, based on the shared vehicle reservation information, whether the user-set route is required to be changed; an optimal route calculation unit configured to calculate an optimal route by reflecting the shared vehicle reservation information, if it is determined that the user-set route is required to be changed; and a control module configured to transmit the calculated optimal route to the mobile device through the communication module.

Aspects of the present invention are only some of the preferred embodiments of the present invention, and various embodiments in which the technical features of the present invention are reflected can be derived and understood by those of ordinary skill in the art based on the detailed description of the present invention to be detailed below.

### [Advantageous Effects]

The effect on the method, device, and system according to the present invention will be described as follows.

The present invention has an advantage of providing a method, device, and system for providing an integrated navigation service using a vehicle sharing network.

In addition, the present invention has an advantage of providing a method, device, and system for providing an integrated navigation service using a vehicle sharing network capable of more accurately and stably providing an optimal route or an optimal transfer route to a destination by predicting future road conditions based on shared vehicle reservation information collected through the vehicle sharing network.

In addition, the present invention has the advantage of enabling a vehicle sharing service by providing a more stable and accurate route provision service for a shared vehicle.

Effects which may be achieved by the present invention are not limited to the above-described effects. That is, other objects that are not described may be obviously understood by those skilled in the art to which the present invention pertains from the following description.

### [BRIEF DESCRIPTION OF THE DRAWINGS]

The accompanying drawings below are provided to help understanding of the present invention, and provide embodiments of the present invention together with a detailed description. However, the technical features of the present invention are not limited to specific drawings, and features disclosed in each drawing may be combined with each other to constitute a new embodiment:
FIG. 1 is a diagram illustrating a system structure for providing an integrated navigation service according to an embodiment of the present invention;
FIG. 2 is a diagram illustrating a system structure for providing an integrated navigation service according to another embodiment of the present invention;
FIGS. 3 to 7 are flowcharts for describing a method for providing an integrated navigation service according to various embodiments of the present invention;
FIG. 8 is a diagram for describing shared vehicle driving information according to an embodiment of the present invention;
FIG. 9 is a block diagram for describing a detailed structure of a shared vehicle according to an embodiment of the present invention;
FIG. 10 is a block diagram for describing a structure of a vehicle sharing server according to an embodiment of the present invention; and
FIG. 11 is a block diagram for describing a structure of an integrated navigation server according to an embodiment of the present invention.

### [Best Mode]

Hereinafter, a devoce and various methods to which embodiments of the present invention are applied will be described in more detail with reference to the drawings.

In addition, terms "module" and "unit" for components used in the following description are used only to easily make the disclosure. Therefore, these terms do not have meanings or roles that distinguish from each other in themselves.

In the description of the embodiment, in the case where it is described as being formed on "upper (on) or lower (below)" of each component, upper (on) or lower (below) means that two components are in direct contact with each other or one or more other components are all formed by being disposed between two components.

In addition, when expressed as "upper (on) or lower (below)", it may include not only the meanings of an upward direction but also a downward direction based on one component.

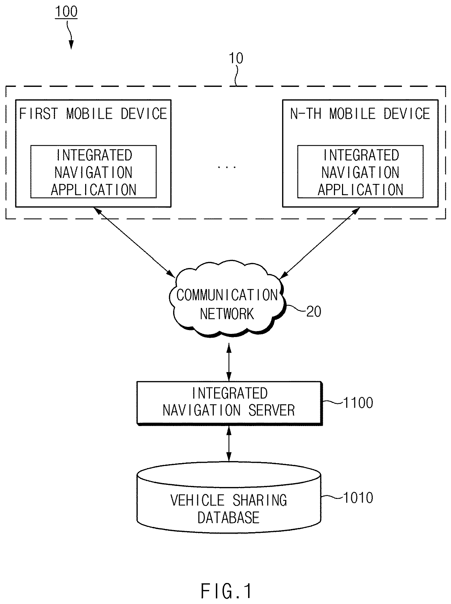

FIG. 1 illustrates a system structure for providing an integrated navigation service according to an embodiment of the present invention.

Referring to FIG. 1, a system 100 may be configured to include first to N-th mobile devices 10 that are subscribed to an integrated navigation service or equipped with an integrated navigation application, a communication network 20, an integrated navigation server 1100, and a vehicle sharing database 1010.

The integrated navigation server 1100 may collect shared vehicle driving information in real time from a shared vehicle terminal (for example, a vehicle head unit or an audio video navigation telematics (AVNT) terminal) mounted on the shared vehicle through the communication network 20.

Also, the integrated navigation server 1100 may collect shared vehicle driving information in real time through the first to N-th mobile devices 10 (N is an integer greater than or equal to 2), which are user terminals driving a shared vehicle.

The integrated navigation server 1100 may acquire shared vehicle reservation information stored in the vehicle sharing database 1010. Here, the shared vehicle reservation information may be information for reserving a specific shared vehicle by setting a destination on a user-set navigation route on a mobile device, and may be used as information for predicting future road conditions on the corresponding driving route. In the shared vehicle reservation information, reservation information for a shared vehicle currently driving on a user-set navigation route may be excluded.

In an embodiment, the integrated navigation server 1100 may directly access the vehicle sharing database 1010 to acquire necessary shared vehicle reservation information.

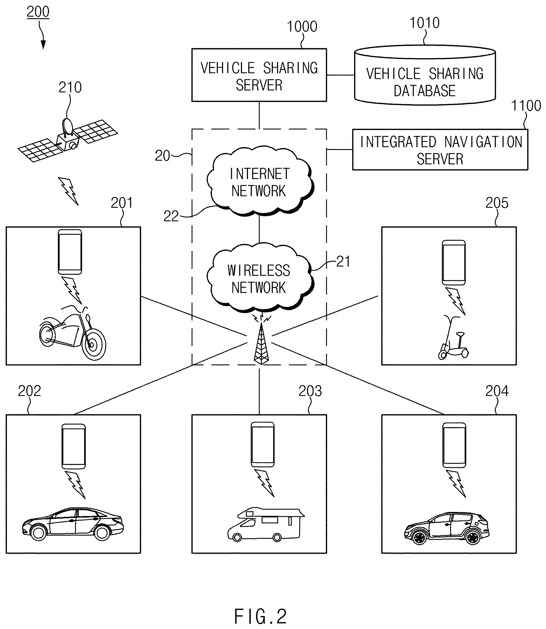

As another embodiment, the integrated navigation server 1100 may acquire the shared vehicle reservation information maintained in the vehicle sharing database 1010 from the vehicle sharing server 1000 as illustrated in FIG. 2 to be described later.

The integrated navigation server 1100 may determine, based on at least one of the shared vehicle driving information and the shared vehicle reservation information, whether the route of the corresponding shared vehicle is required to be changed.

When the route is required to be changed, the integrated navigation server 1100 may calculate an optimal route or an optimal transfer route for the shared vehicle and transmit the calculated optimal route or optimal transfer route to the shared vehicle terminal or the user terminal of the shared vehicle. A user may transfer to various shared vehicles to his/her destination as needed. For example, the user may go to work by moving from the house to a public parking lot with a shared bicycle and transferring to a shared passenger car arranged in the public parking lot.

The integrated navigation server 1100 may also provide a shared vehicle usage fee discount benefit to a user account of the corresponding shared vehicle when the route change to the calculated optimal route or optimal transfer route is checked.

The integrated navigation server 1100 may identify, from among the shared vehicle reservation information collected in real time, information that is required to be shared with other shared vehicle users, and transmit the identified information (for example, traffic condition information) to the user of the corresponding shared vehicle.

FIG. 2 illustrates a system structure for providing an integrated navigation service according to another embodiment of the present invention.

Referring to FIG. 2, a system 200 for providing an integrated navigation service may be configured to include an integrated navigation server 1100, a vehicle sharing server 1000, a vehicle sharing database 1010, a plurality of shared vehicle terminals 201 to 205, a positioning satellite 210, and the communication network 20.

Here, the shared vehicle terminals 201 to 205 may include a terminal (hereinafter, for the convenience of description, used interchangeably with the vehicle terminal) mounted inside the shared vehicle and/or a shared vehicle user terminal.

A vehicle terminal and a user terminal may exchange information through short-range wireless communication.

The shared vehicle terminals 201 to 205 may receive a signal from the positioning satellite 210 to determine their current positions.

The shared vehicle terminals 201 to 205 may exchange information with the vehicle sharing server 1000 and the integrated navigation server 1100 through the communication network.

The vehicle sharing server 1000 may be connected with the integrated navigation server 1100 through the communication network 20.

The communication network 20 may include a wireless network 21 and an Internet network 22.

The integrated navigation server 1100 may collect shared vehicle driving information in real time from the shared vehicle terminals 201 to 205 through the communication network 20.

The integrated navigation server 1100 may request and acquire shared vehicle reservation information stored in the vehicle sharing database 1010 from the vehicle sharing server 1000.

The integrated navigation server 1100 may request and acquire information on a shared vehicle currently driving on a specific driving route from the vehicle sharing server 1000.

The integrated navigation server 1100 may identify a shared vehicle requiring a route change based on at least one of the shared vehicle driving information and the shared vehicle reservation information.

When the shared vehicle requiring the route change is identified, the integrated navigation server 1100 may calculate an optimal route or an optimal transfer route for the corresponding shared vehicle and transmit the calculated optimal route or optimal transfer route to the shared vehicle terminal.

The integrated navigation server 1100 may provide a shared vehicle usage fee discount benefit to a user account of the shared vehicle when the route change to the optimal route or the optimal transfer route calculated on the corresponding shared vehicle terminal is checked.

The integrated navigation server 1100 may identify, from among the shared vehicle reservation information collected in real time, information that needs to be shared with other shared vehicle users, and transmit the identified information (for example, traffic condition information) to the corresponding shared vehicle terminal.

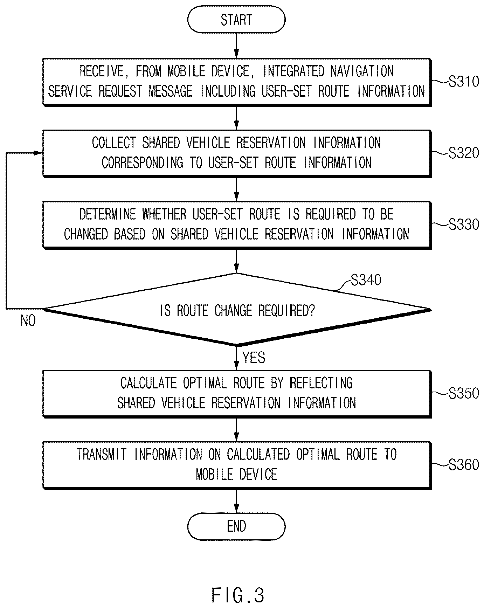

FIG. 3 is a flowchart for describing a method for providing an integrated navigation service according to an embodiment of the present invention.

Referring to FIG. 3, the integrated navigation server 1100 may receive, from the mobile device, an integrated navigation service request message including user-set route information (S310). Here, the mobile device may be a user terminal using the shared vehicle, but if this is only one embodiment, the mobile device may be a terminal mounted on the shared vehicle. A user may set a route to a destination through his/her mobile terminal or a terminal (that is, a vehicle head unit or an AVNT terminal) mounted on a shared vehicle currently driving.

The integrated navigation server 1100 may collect the shared vehicle reservation information corresponding to the user-set route information (S320). Here, the shared vehicle reservation information may be acquired by requesting the vehicle sharing server 1000.

The integrated navigation server 1100 may determine based on the shared vehicle reservation information whether the user-set route is required to be changed (S330).

If it is determined that the route is required to be changed, the integrated navigation server 1100 may calculate an optimal route by reflecting the shared vehicle reservation information (S340 and S350).

The integrated navigation server 1100 may transmit information on the calculated optimal route to the corresponding mobile device (S360).

In the embodiment of FIG. 3, it has been described that the mobile device transmits the integrated navigation service request message including the user-set route information to the integrated navigation server 1100, but this is only one embodiment. In another embodiment, the mobile device may transmit the integrated navigation service request message including the current position information to the integrated navigation server 1100, and the integrated navigation server 1100 may request and acquire the shared vehicle reservation information corresponding to the current position information from the vehicle sharing server 1000.

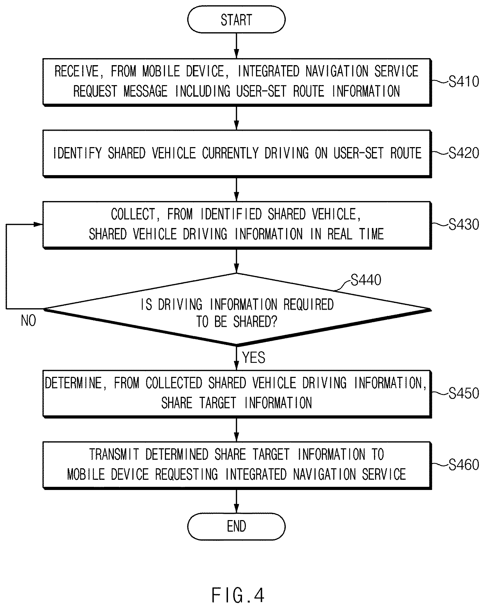

FIG. 4 is a flowchart for describing a method for providing an integrated navigation service according to another embodiment of the present invention.

Referring to FIG. 4, the integrated navigation server 1100 may receive, from the mobile device, an integrated navigation service request message including user-set route information (S410).

Here, the mobile device may be a user terminal using the shared vehicle, but if this is only one embodiment, the mobile device may be a terminal mounted on the shared vehicle. A user may set a route to a destination through his/her mobile terminal or a terminal (that is, a vehicle head unit or an AVNT terminal) mounted on a shared vehicle currently driving.

The integrated navigation server 1100 may identify a shared vehicle currently driving on a user-set route (S420). Here, the integrated navigation server 1100 may request and acquire the information on the shared vehicle currently driving on the user-set route from the vehicle sharing server 1000.

The integrated navigation server 1100 may collect the shared vehicle driving information in real time from the identified shared vehicle (S430).

The integrated navigation server 1100 may analyze the collected shared vehicle driving information collected in real time to determine whether the driving information is required to be shared (S440).

If it is determined that the sharing is required, the integrated navigation server 1100 may determine information to be shared from the collected shared vehicle driving information (S450).

The integrated navigation server 1100 may transmit the determined share target information to the mobile device requesting the integrated navigation service (S460).

In the embodiment of FIG. 4 described above, it has been described that the mobile device transmits the integrated navigation service request message including the user-set route information to the integrated navigation server 1100, but this is only one embodiment. In another embodiment, the mobile device may transmit the integrated navigation service request message including the current position information to the integrated navigation server 1100, and the integrated navigation server 1100 may identify the shared vehicle corresponding to the current position information and then collect the shared vehicle driving information from the identified shared vehicle.

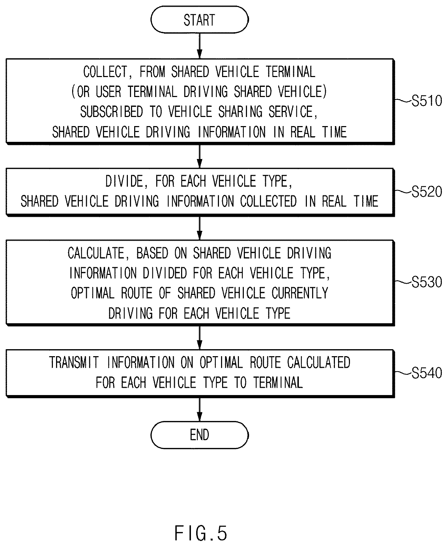

FIG. 5 is a flowchart for describing a method for providing an integrated navigation service according to another embodiment of the present invention.

Referring to FIG. 5, the integrated navigation server 1100 may collect the shared vehicle driving information in real time from a shared vehicle terminal (or a user terminal operating a shared vehicle) subscribed to a vehicle sharing service (S510).

The integrated navigation server 1100 may divide, for each type, the shared vehicle driving information collected in real time (S520).

The integrated navigation server 1100 may calculate, for each vehicle type, an optimal route of the shared vehicle currently driving based on the shared vehicle driving information divided for each vehicle type (S530).

The integrated navigation server 1100 may transmit information on the optimal route calculated for each vehicle type to the corresponding terminal (S540).

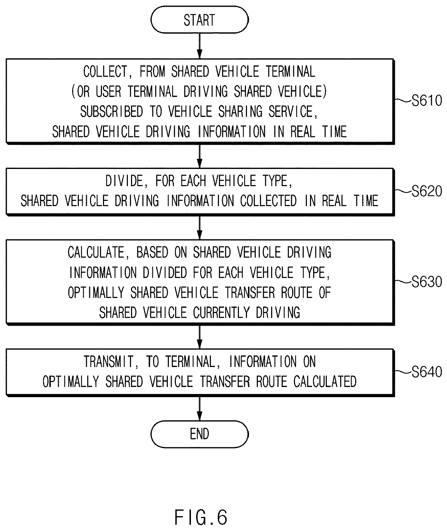

FIG. 6 is a flowchart for describing a method for providing an integrated navigation service according to another embodiment of the present invention.

Referring to FIG. 6, the integrated navigation server 1100 may collect the shared vehicle driving information in real time from a shared vehicle terminal (or a user terminal operating a shared vehicle) subscribed to a vehicle sharing service (S610).

The integrated navigation server 1100 may divide, for each type, the shared vehicle driving information collected in real time (S620).

The integrated navigation server 1100 may calculate the optimal shared vehicle transfer route (hereinafter, for convenience of description, interchangeably used with "optimal transfer route") of the shared vehicle currently driving based on the shared vehicle driving information divided for each vehicle type (S630).

The integrated navigation server 1100 may transmit the information on the calculated optimal shared vehicle transfer route to the corresponding terminal (S640).

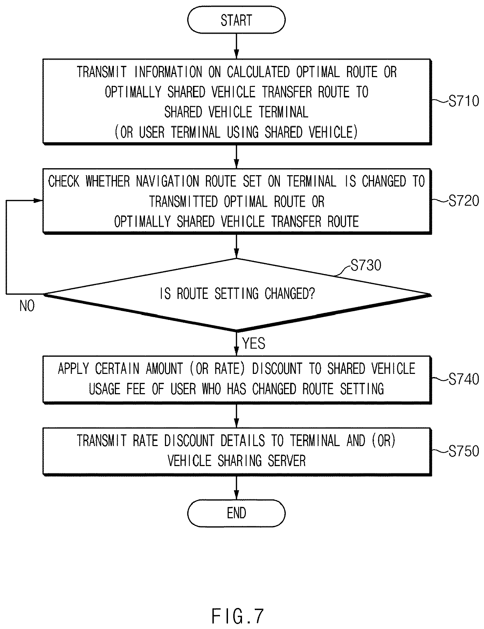

FIG. 7 is a flowchart for describing a method for providing an integrated navigation service according to another embodiment of the present invention.

Referring to FIG. 7, the integrated navigation server 1100 may transmit the information on the calculated optimal route or optimal shared vehicle transfer route to the corresponding shared vehicle terminal (or the user terminal using the shared vehicle) (S710).

The integrated navigation server 1100 may check whether the navigation route set on the corresponding terminal is changed to the transmitted optimal route or the optimal shared vehicle transfer route (S720).

If it is checked that the route setting is changed, the integrated navigation server 1100 may apply a discount of a certain amount (or rate) to a shared vehicle usage fee of a user who has changed the route setting (S730 and S740).

The integrated navigation server 1100 may transmit rate discount details to the corresponding terminal and (or) the vehicle sharing server 1000 (S750).

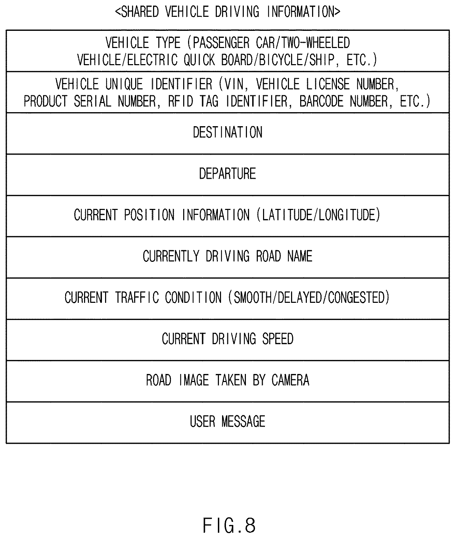

FIG. 8 is a diagram for describing shared vehicle driving information according to an embodiment of the present invention.

Referring to FIG. 8, the shared vehicle driving information collected by the integrated navigation server 1100 may include vehicle type information, vehicle unique identifier information, destination information, departure information, current position information, current driving road name information, current traffic condition information, current driving speed information, road image information taken through a camera mounted on the shared vehicle, and a user message.

Here, the vehicle unique identifier may include a vehicle identification number (VIN), a vehicle license number, and a product serial number (for example, it may correspond to an electric quick board, an electric bicycle, a general bicycle, etc.), an RFID tag identifier, a barcode number, etc., attached to a shared vehicle, but is not limited thereto.

The user message is information input by the shared vehicle user, and may include, but not limited to, a text message and image information taken by a user terminal camera.

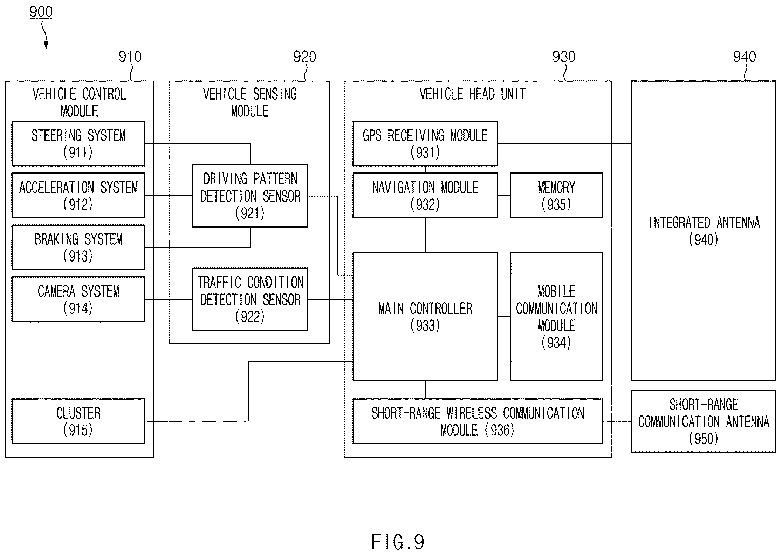

FIG. 9 is a block diagram for describing a detailed structure of a shared vehicle according to an embodiment of the present invention.

Referring to FIG. 9, a shared vehicle 900 may be configured to largely include a vehicle control module 910, a vehicle sensing module 920, a vehicle head unit 930, an integrated antenna 940, and a short-range communication antenna 950.

The vehicle control module 910 may generate various kinds of raw data required for driving pattern analysis and traffic condition information collection and provide the generated raw data to the vehicle sensing module 920.

The vehicle sensing module 920 may detect a specific driving event or a traffic condition event based on various raw data collected from the vehicle control module 910, and may provide information on the detected event to the vehicle head unit 930.

For example, the specific driving event may include, but not limited to, a lane change event, a sudden braking/rapid acceleration event, a left/right turn event, a U-turn event, etc.

For example, the traffic condition event may include, but not limited to, a traffic accident event, a delay event, a congestion event, etc.

The vehicle control module 910 may include a steering system 911 that controls a driving direction of a vehicle in connection with a steering wheel, etc., an acceleration system 912 that supplies fuel to an engine in connection with an accelerator pedal (or, in the case of an electric vehicle, supplies power to a drive motor in connection with the accelerator pedal), a braking system 913 that performs braking control in connection with the brake pedal, a camera system 914 that photographs external driving environment using at least one camera, and a cluster 915.

The cluster 915 may generate mileage information, fuel efficiency information, driving speed information, etc., and provide the generated mileage information, fuel efficiency information, driving speed information, etc., to the vehicle head unit 930.

The vehicle sensing module 920 may be configured to include a driving pattern detection sensor 921 and a traffic condition detection sensor 922.

The driving pattern detection sensor 921 may analyze the driving pattern based on the raw data received from the steering system 911, the acceleration system 912, and the braking system 913, and generate a specific driving event based on the analysis result.

The traffic condition detection sensor 922 may analyze an image signal received from the camera system 914 to identify the current traffic condition, and generate a traffic condition event according to the identification result.

The vehicle head unit 930 may be configured to include a GPS receiving module 931, a navigation module 932, a main controller 933, a mobile communication module 934, a memory 935, and a short-range wireless communication module 936.

The main controller 933 may receive sensing information (that is, various event detection signals) from the vehicle sensing module 920 while driving a vehicle, and may control overall operations and input/output of the vehicle head unit 930.

The GPS receiving module 931 may acquire position information by demodulating a GPS signal received through the communication antenna 950, and may provide the acquired position information to the navigation module 932.

The navigation module 932 may provide a driving guidance service to a driver of the shared vehicle 900 based on the position information received from the GPS receiving module 931 and map information stored in the memory 935.

The main controller 933 may provide information received from the vehicle sensing module 920 and the vehicle control module 910 as well as various types of information received from a telematics server (not illustrated) to the navigation module 932.

For example, the main controller 933 may provide the navigation module 932 with information on the current driving speed received from the cluster 915, weather information received from the telematics server, etc.

The main controller 933 may acquire destination setting information, information on a currently driving area and road, etc., from the navigation module 932.

The main controller 933 may generate the shared vehicle driving information based on the information acquired from the vehicle control module 910, the vehicle sensing module 920, and the navigation module 932, and transmit the generated shared vehicle driving information to the vehicle sharing server 1000 and (or) the integrated navigation server 1100 to be described below through the mobile communication module 934 and the integrated antenna 940.

The mobile communication module 934 may be equipped with 3G wideband code division multiple access (WCDMA), 4G long term evolution (LTE), and 5G new radio (NR) functions based on the 3rd Generation Partnership Project (3GPP) standard, but is not limited thereto, and may be equipped with ITS-G5 based on the European Intelligent Transportation System (ITS) standard, wireless access in vehicular environments (WAVE) based on IEEE 1609.2 which is a wireless communication standard in the automotive environment, etc.

The short-range wireless communication module 936 may connect the user terminal and short-range wireless communication through the short-range communication antenna 950. For example, the short-range wireless communication may include, but not limited thereto, Bluetooth communication and Wi-Fi communication.

According to an embodiment, the main controller 933 may acquire a user message describing the current traffic condition through the short-range wireless communication set with the user terminal. Here, the user message may include, but not limited to, a voice message, an image message, a text message, etc.

The main controller 933 may generate the shared vehicle driving information, including the user message.

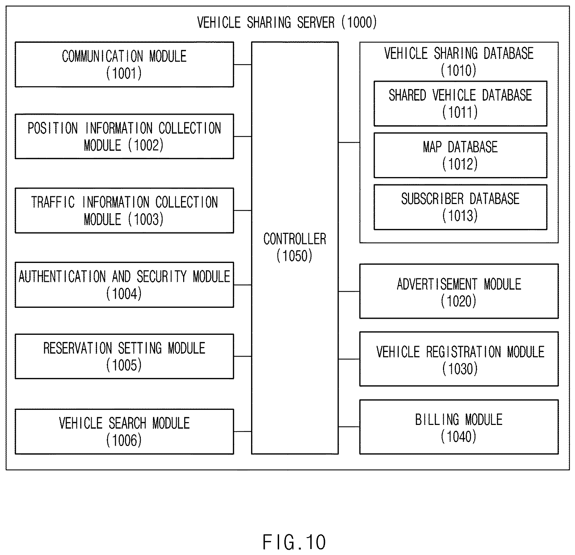

FIG. 10 is a block diagram for describing a structure of a vehicle sharing server according to an embodiment of the present invention.

Referring to FIG. 10, the vehicle sharing server 120 may be configured to include a communication module 1001, a position information collection module 1002, a traffic information collection module 1003, an authentication and security module 1004, a reservation setting module 1005, a vehicle search module 1006, a vehicle sharing database 1010, an advertisement module 1020, a vehicle registration module 1030, and a billing module 1040.

The communication module 1001 may process a signal transmitted and received through the communication network 150.

The position information collection module 1002 may acquire position information of the shared vehicle and position information of a booker terminal periodically or when a specific event occurs.

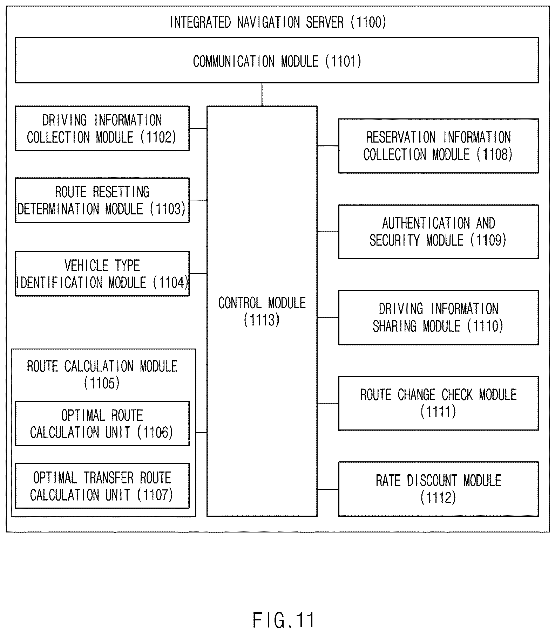

The traffic information collection module 1003 may collect current traffic condition information corresponding to a region of interest from the integrated navigation server 1100 of FIG. 11, which will be described later, the existing traffic information providing server (not illustrated), etc.

The authentication and security module 1004 may authenticate a subscriber subscribed to a vehicle sharing service and generate a security message.

As an example, the authentication and security module 1004 may authenticate a subscriber based on biometric information. In addition, the authentication and security module 1004 may generate a security message based on biometric information corresponding to the corresponding subscriber and decrypt the security message received from the corresponding subscriber based on the biometric information of the corresponding subscriber.

The reservation setting module 1005 may configure a predetermined reservation screen for a shared vehicle reservation.

The reservation setting module 1005 may update the shared vehicle database 1011 based on the reservation set by the subscriber.

The reservation setting module 1005 may update reservation details for the shared vehicle based on the processing result according to a shared vehicle driver's request for delayed return, early return, etc.

The reservation setting module 1005 may collect and provide the shared vehicle reservation information corresponding to a specific driving route from the shared vehicle database 1011 according to the request of the integrated navigation server 1100. For example, the reservation setting module 1005 may identify, for each time zone, a shared vehicle reserved by setting a specific area on a specific driving route as a destination, and transmit the identified shared vehicle reservation information to the integrated navigation server 1100.

The integrated navigation server 1100 may predict the traffic condition on the corresponding driving route based on the shared vehicle reservation information collected from the vehicle sharing server 1000, and calculate an optimal route or an optimal transfer route according to the prediction result and transmit the calculated optimal route or optimal transfer route to the corresponding shared vehicle terminal or user terminal.

The vehicle search module 1006 may search for an optimal shared vehicle corresponding to the subscriber's request.

The vehicle search module 1006 may search for and provide an optimal replacement vehicle for a booker of the corresponding shared vehicle when a message for requesting to return the shared vehicle is received from the shared vehicle terminal or the shared vehicle user terminal.

The vehicle sharing database 1010 may include a shared vehicle database 1011 in which detailed information on a shared vehicle registered with a service is recorded, a map database 1012 in which various types of map information is recorded, and a subscriber database 1013 in which subscription information subscribed to the vehicle sharing service is recorded.

As an example, the shared vehicle database 1011 may include vehicle-specific owner information, vehicle type and option information, accident history information, cumulative penalty information, evaluation information, reservation information, current position information, information on return date and location for each reservation, etc, but is not limited thereto.

The map database 1012 may maintain map information configured in units of specific zones. In an embodiment, when the return location for the shared vehicle is required to be changed, the controller 1050 may determine a target zone in consideration of the current positions of the shared vehicle terminal and the booker terminal, and determine a recommended return location in consideration of traffic conditions etc., within the target zone.

The subscriber database 1013 may store personal information for each subscriber, contact information, preferred vehicle information, vehicle reservation information, billing information, evaluation information, point information, driving statistics information, penalty statistics information, insurance rate information, etc., but is not limited thereto.

The advertisement module 1020 may generate an advertisement message to be transmitted to the corresponding subscriber terminal.

The advertisement module 1020 may generate an advertisement message corresponding to the current position of the driving shared vehicle and transmit the generated advertisement message to the corresponding shared vehicle terminal and/or the shared vehicle user terminal.

The vehicle registration module 1030 may register the corresponding vehicle as a new shared vehicle according to a vehicle owner's request, or may register the pre-registered shared vehicle at the request of the vehicle owner or for other reasons (for example, including a case where a vehicle's rating is below a standard or a fatal traffic accident has occurred).

The billing module 1040 may calculate the shared vehicle usage fee for each subscriber.

In addition, the billing module 1040 may update the usage fee for the corresponding subscriber account based on the details of the shared vehicle usage fee discount received from the integrated navigation server 1100.

In addition, the billing module 1040 may generate various bonus coupons and transmit the corresponding coupons to the corresponding subscriber terminal.

The controller 1050 may control the overall operation and input/output of the vehicle sharing server 1000. In particular, the controller 1050 may detect various events and configure a user interface screen according to the detected events.

The detailed operation of the controller 1050 is replaced with the description of FIGS. 1 to 9 and FIG. 11 to be described above.

FIG. 11 is a block diagram for describing a structure of an integrated navigation server according to an embodiment of the present invention.

Referring to FIG. 11, the integrated navigation server 1100 may be configured to include a communication module 1101, a lower module that includes a driving information collection module 1102, a route resetting determination module 1103, a vehicle type identification module 1004, a route calculation module 1105, a reservation information collection module 1108, an authentication and security module 1109, a driving information sharing module 1110, a route change check module 1111, and a rate discount module 1112, and a control module 1113.

The communication module 1101 may process a signal transmitted and received through the communication network 150. For example, the communication module 1101 may exchange information with the shared vehicle 900, the vehicle sharing server 1000, and a user terminal through a communication network.

The driving information collection module 1102 may collect shared vehicle driving information currently driving and shared vehicle driving information from a user terminal driving the shared vehicle in real time.

The shared vehicle driving information may include various types of information that may determine the current traffic conditions around the shared vehicle.

For example, the shared vehicle driving information may include information for identifying a shared vehicle type, shared vehicle identification information that may uniquely identify a shared vehicle registered in a vehicle sharing service, current route setting information, current position information, current driving road name information, current traffic condition information, current driving speed information, fuel efficiency information, driving road photographing information, a user input message, etc.

Here, the shared vehicle type may include, but not limited to, a passenger car, a two-wheeled vehicle, an electric quick board, a bicycle, a ship, a private airplane, etc., and may include a drone, an agricultural machine, etc.

The reservation information collection module 1108 may acquire the shared vehicle reservation information from the vehicle sharing server 1000.

The reservation information collection module 1108 may collect shared vehicle reservation information corresponding to the shared vehicle terminal (or shared vehicle driver terminal) requesting the integrated navigation service.

As an example, the reservation information collection module 1108 may collect shared vehicle reservation information in which a destination is set on a navigation setting path of a vehicle requesting the integrated navigation service.

The route resetting determination module 1103 may predict the road conditions of the driving route of the vehicle requesting the integrated navigation service based on at least one of the collected shared vehicle driving information and the shared vehicle reservation information, and determine whether the route resetting is required according to the prediction result.

The vehicle type identification module 1104 may identify the vehicle type of the shared vehicle to which the shared vehicle driving information is transmitted.

The route calculation module 1105 may reset the route of the vehicle requesting the integrated navigation service according to the determination result of the route resetting determination module 1103.

The route calculation module 1105 may include an optimal route calculation unit 1106 and an optimal transfer route calculation unit 1107.

The optimal route calculation unit 1106 may calculate an optimal route for the corresponding shared vehicle based on at least one of the shared vehicle driving information and the shared vehicle reservation information. Here, the optimal route may include a shortest distance route, a shortest time route, and a minimum cost route.

The optimal transfer route calculation unit 1107 may classify the shared vehicle driving information and the shared vehicle reservation information for each vehicle type, and calculate an optimal route for each vehicle type based on the classified information.

The optimal transfer route calculation unit 1107 may calculate an optimal transfer route based on the calculated optimal route for each vehicle type. Here, the optimal transfer route may include a shortest distance transfer route, a shortest time transfer route, and a minimum cost transfer route.

The authentication and security module 1109 may authenticate a subscriber subscribed to the integrated navigation service and generate a security message.

As an example, the authentication and security module 1109 may authenticate a subscriber based on biometric information. In addition, the authentication and security module 1109 may generate a security message based on biometric information corresponding to the corresponding subscriber and decrypt the security message received from the corresponding subscriber based on the biometric information of the corresponding subscriber.

The driving information sharing module 1110 may serve to analyze various types of shared vehicle driving information collected from a terminal subscribed to the integrated navigation service to identify traffic condition information that needs to be shared, and transmit the identified traffic condition information to other terminals subscribed to the integrated navigation service.

For example, the traffic condition information that needs to be shared may include traffic accident information, construction information, event and assembly information, driving situation information (for example, smooth/delayed/congested), driving speed information, fuel efficiency information, etc., but is not limited thereto.

The driving information sharing module 1110 has the advantage of controlling important traffic condition information to be shared more quickly and accurately among subscribers subscribed to the integrated navigation service to thereby enable the shared vehicle user to quickly and appropriately cope with changes in traffic conditions.

The driving information sharing module 1110 may transmit traffic condition information for each region to the vehicle sharing server 1000 at a predetermined period.

The integrated navigation server 1100 and the vehicle sharing server 1000 have the advantage of providing a higher quality of vehicle sharing service through mutual information exchange.

The route change check module 1111 may check whether the optimal route or the optimal transfer route calculated by the route calculation module 1105 is used by the navigation application of the corresponding terminal subscribed to the integrated navigation service. That is, the route change check module 1111 may check whether the existing set route is changed to the route calculated by the route calculation module 1105.

The rate discount module 1112 may apply a shared vehicle usage fee discount to the integrated navigation service subscriber whose route change is checked by the route change check module 1111.

The rate discount module 1112 may transmit information on the applied shared vehicle usage fee discount to the corresponding subscriber terminal and the vehicle sharing server 1000.

The vehicle sharing server 1000 may update the shared vehicle usage fee of the corresponding subscriber according to the shared vehicle usage fee discount information received from the integrated navigation server 1100.

In addition, the rate discount module 1112 may assign points to the integrated navigation service subscriber whose route change is checked by the route change check module 1111, and generate various bonus coupons based on cumulative points and transmit the generated bonus coupons to the subscriber terminal.

Here, the bonus coupon may include a shared vehicle free use coupon, a shared vehicle usage fee discount coupon, etc.

The control module 1113 may control the overall operation of the integrated navigation server 1100 and the input/output of the lower module.

Specific operations and functions of the control module 1113 are replaced with the descriptions of FIGS. 1 to 10 described above.

It will be apparent to those skilled in the art that the present invention may be embodied in other specific forms without departing from the spirit and essential characteristics of the present invention.

Therefore, the above-described detailed description is to be interpreted as being illustrative rather than being restrictive in all aspects. The scope of the present invention should be determined by reasonable interpretation of the appended claims, and all changes within the equivalent scope of the present invention are included in the scope of the present invention.

## Claims

1. A method for providing an integrated navigation service in connection with a mobile device and a vehicle sharing server through a communication network, the method comprising:
receiving, from the mobile device, an integrated navigation service request message including information on a user-set route;
acquiring, from the vehicle sharing server, shared vehicle reservation information corresponding to the user-set route;
determining, based on the shared vehicle reservation information, whether the user-set route is required to be changed;
calculating an optimal route by reflecting the shared vehicle reservation information, if it is determined that the user-set route is required to be changed; and
transmitting the calculated optimal route to the mobile device.

2. The method of claim 1, wherein the mobile device is mounted on a shared vehicle and includes a vehicle head unit equipped with a navigation function and a user terminal using the shared vehicle.

3. The method of claim 1, wherein the shared vehicle reservation information is information for reserving a shared vehicle by setting a destination on the user-set route.

4. The method of claim 3, wherein the shared vehicle reservation information excludes reservation information corresponding to a shared vehicle currently driving on the user-set route.

5. The method of claim 1, wherein a future road condition on the user-set route is predicted based on the shared vehicle reservation information, and an optimal route is calculated based on the prediction result.

6. The method of claim 1, further comprising:
identifying a shared vehicle currently driving on the user-set route;
collecting, from the identified shared vehicle, shared vehicle driving information;
analyzing the collected shared vehicle driving information to determine whether driving information sharing is required;
determining, from the collected shared vehicle driving information, share target information, if it is determined that the sharing is required; and
transmitting the determined share target information to the mobile device.

7. The method of claim 6, wherein the shared vehicle driving information includes at least one of vehicle type information, vehicle unique identifier information, destination information, departure information, current position information, current driving road name information, current traffic condition information, current driving speed information, road image information taken through a camera mounted on the shared vehicle, and a user message.

8. The method of claim 7, further comprising:
collecting, from a mobile device subscribed to a vehicle sharing service, the shared vehicle driving information;
dividing the shared vehicle driving information for each vehicle type;
calculating an optimal transfer route for a shared vehicle currently driving based on the shared vehicle driving information divided for each vehicle type; and
transmitting the calculated optimal transfer route to the mobile device.

9. The method of claim 8, further comprising:
checking whether the user-set route is changed to the optimal route or the optimal transfer route on the mobile device;
applying a usage fee discount of the shared vehicle to a user of the mobile device, if it is checked that the user-set route is changed; and
transmitting details of the usage fee discount to the vehicle sharing server.

10. An integrated navigation server in connection with a mobile device and a vehicle sharing server through a communication network, the integrated navigation server comprising:
a communication module configured to receive, from the mobile device, an integrated navigation service request message including information on a user-set route;
a reservation information collection module configured to acquire, from the vehicle sharing server, shared vehicle reservation information corresponding to the user-set route;
a route resetting determination module configured to determine, based on the shared vehicle reservation information, whether the user-set route is required to be changed;
an optimal route calculation unit configured to calculate an optimal route by reflecting the shared vehicle reservation information, if it is determined that the user-set route is required to be changed; and
a control module configured to transmit the calculated optimal route to the mobile device through the communication module.

11. The integrated navigation server of claim 10, wherein the mobile device is mounted on a shared vehicle and includes a vehicle head unit equipped with a navigation function and a user terminal using the shared vehicle.

12. The integrated navigation server of claim 10, wherein the shared vehicle reservation information is information for reserving a shared vehicle by setting a destination on the user-set route.

13. The integrated navigation server of claim 12, wherein the shared vehicle reservation information excludes reservation information corresponding to a shared vehicle currently driving on the user-set route.

14. The integrated navigation server of claim 10, wherein the optimal route calculation unit predicts a future road condition on the user-set route based on the shared vehicle reservation information, and calculates an optimal route based on the prediction result.

15. The integrated navigation server of claim 10, further comprising:
a driving information collection module configured to identify a shared vehicle currently driving on the user-set route and collect, from the identified shared vehicle, shared vehicle driving information; and
a driving information sharing module configured to analyze the collected shared vehicle driving information to determine whether the driving information is required to be shared, and determine from the collected shared vehicle driving information, share target information, if it is determined that the sharing is required to transmit the determined share target information to the mobile device.

16. The integrated navigation server of claim 15, wherein the shared vehicle driving information includes at least one of vehicle type information, vehicle unique identifier information, destination information, departure information, current position information, current driving road name information, current traffic condition information, current driving speed information, road image information taken through a camera mounted on the shared vehicle, and a user message.

17. The integrated navigation server of claim 16, further comprising:
a vehicle type identification module configured to divide, for the vehicle type, the shared vehicle driving information collected from a mobile device subscribed to a vehicle sharing service; and
an optimal transfer route calculation unit configured to calculate, based on the shared vehicle driving information divided for each vehicle type, an optimal transfer route for a shared vehicle currently driving,
wherein the control module transmits the calculated optimal transfer route to the mobile device.

18. The integrated navigation server of claim 17, further comprising:
a route change check module configured to check whether the user-set route is changed to the optimal route or the optimal transfer route on the mobile device; and
a rate discount module configured to apply a usage fee discount of the shared vehicle to a user of the mobile device, if it is checked that the user-set route is changed,
wherein the control module transmits details of the usage fee discount to the vehicle sharing server.

19. A system for providing an integrated navigation service, comprising:
a mobile device equipped with a navigation function;
a vehicle sharing server configured to provide a vehicle sharing service; and
an integrated navigation server configured to provide the integrated navigation service in connection with the mobile device and the vehicle sharing server through a communication network,
wherein the integrated navigation server includes:
a communication module configured to receive, from the mobile device, an integrated navigation service request message including information on a user-set route; a reservation information collection module configured to acquire, from the vehicle sharing server, shared vehicle reservation information corresponding to the user-set route;
a route resetting determination module configured to determine, based on the shared vehicle reservation information, whether the user-set route is required to be changed;
an optimal route calculation unit configured to calculate an optimal route by reflecting the shared vehicle reservation information, if it is determined that the user-set route is required to be changed; and
a control module configured to transmit the calculated optimal route to the mobile device through the communication module.
